# NEUE EUROPÄISCHE PATENTSCHRIFT

(11) **EP 3 322 534 B2**
(45) Veröffentlichungstag und Bekanntmachung des Hinweises auf die Entscheidung über den Einspruch: **18.10.2023**
(45) Hinweis auf die Patenterteilung: 02.09.2020
(21) Anmeldenummer: 15748185.4
(22) Anmeldetag: 16.07.2015
(51) Int. Cl.: B02C 15/00, B02C 23/12, B02C 23/14, C04B 5/00, C04B 7/153, C22B 7/04

(54) **VERFAHREN UND ANLAGENANORDNUNG ZUM AUFBEREITEN UND AKTIVIEREN EINES ROHSTOFFES**
METHOD AND PLANT ARRANGEMENT FOR BENEFICIATING AND ACTIVATING OF A RAW MATERIAL
PROCÉDÉ ET AGENCEMENT POUR TRAITEMENT ET ACTIVATION D'UNE MATIÈRE PREMIÈRE

(43) Veröffentlichungstag der Anmeldung: 23.05.2018
(73) Patentinhaber: Loesche GmbH, 40549 Düsseldorf (DE)
(72) Erfinder: WULFERT, Holger, 40549 Düsseldorf (DE); LUDWIG, Horst-Michael, 40549 Düsseldorf (DE); BÄTZ, André, 40549 Düsseldorf (DE); RUHKAMP, Winfried, 40549 Düsseldorf (DE); JANSSEN, Markus, 40549 Düsseldorf (DE)
(74) Vertreter: Wunderlich & Heim Patentanwälte Partnerschaftsgesellschaft mbB
(86) Internationale Anmeldenummer: PCT/EP2015/066348
(87) Internationale Veröffentlichungsnummer: WO 2017/008863

(56) Entgegenhaltungen:
- EP-A2- 0 112 022
- EP-A2- 0 118 782
- EP-A2- 0 338 231
- WO-A1-02/31091
- WO-A1-2011/107124
- WO-A1-2014/037020
- WO-A2-2005/076858
- CN-A- 104 384 007
- CN-U- 203 253 480
- CN-U- 203 355 840
- CN-U- 203 874 885
- CN-U- 203 916 764
- CN-Y- 201 320 533
- DE-A1- 2 747 957
- DE-A1- 4 118 657
- DE-A1- 10 333 361
- DE-A1- 10 343 218
- DE-A1-102010 018 046
- DE-A1-102010 036 176
- DE-T1- 10 084 980
- DE-U1- 9 101 419
- JP-A- H 091 077
- JP-A- S5 575 747
- JP-A- H01 188 451
- JP-A- S63 285 138
- JP-A- 2000 202 368
- US-A- 5 269 637
- US-A- 6 038 987
- US-A1- 2005 167 534
- US-A1- 2007 095 255
- US-A1- 2012 012 034
- US-A1- 2013 168 476
- US-A1- 2013 178 561
- US-A1- 2014 299 684
- US-A1- 2015 083 958
- TSAKIRIDIS P E ET AL: "Utilization of steel slag for Portland cement clinker production", JOURNAL OF HAZARDOUS MATERIALS, ELSEVIER, AMSTERDAM, NL, Bd. 152, Nr. 2, 1. April 2008 (2008-04-01) , Seiten 805-811, XP026052157, ISSN: 0304-3894, DOI: 10.1016/J.JHAZMAT.2007.07.093 [gefunden am 2008-04-01]
- Tsakiridis, P.E.et al: "Utilization of steel slag for Portland cement clinker production", Journal of Hazardous Materials, vol. 152, no. 2, 4 March 2008 (2008-03-04) , pages 805-811, ISSN: 0304-3894, DOI: 10.1016/j.jhazmat.2007.07.093
- SEEMANN, STEFAN: "Einfluss des Mahlsystems und der Mahlatmosphäre auf die Zementeigenschaften", 2010, Verlag Bau+Technik GmbH, Düsseldorf ISBN: 978-3-7640-0524-5
- Ausdruck der Webseite:https://www.eurQbuch.com/buch/isb n/9783764QQ5245.html
- Anonymous: "Cyclonic separation - Wikipedia", , 18 May 2015 (2015-05-18), pages 1-5, Retrieved from the Internet: URL:https://en.wikipedia.org/w/index.php?t itle=Cyclonic_separation&oldid=662921746
- Artikel ?Metallruckgewinnung und Fullererzeugung aus Stahlwerkschlacken"
- Artikel: ?Vertikal-Walzmuhle"
- Wikipedia Artikel ?Zementklinker'
- Wikipedia Artikel ?Larnit?
- Wikipedia Artikel ?Vertikalmühle?

## Beschreibung

Die Erfindung betrifft ein Verfahren zum Aufbereiten und Aktivieren eines Rohstoffes, welcher latent hydraulische, hydraulische, inerte oder puzzolanische Eigenschaften aufweist.

Es sind Verfahren zum Aufbereiten eines Rohstoffes bekannt, bei denen der Rohstoff mittels Mahlwalzen einer Mühle-Sichter-Kombination zerkleinert wird. Hierbei weist die Mühle-Sichter-Kombination einen Sichter und eine Vertikalmühle auf, wobei die Vertikalmühle einen Mahlteller und mehrere Mahlwalzen hat. Die Mühle-Sichter-Kombination wird zum Herstellen eines Mahlproduktes aus dem Rohstoff, welcher der Mühle-Sichter-Kombination aufgegeben wird, mit einer Feinheit zwischen D50 = 3 µm und D50 = 12 µm eingestellt und betrieben. Hierbei wird bei einer ersten Sichtung mindestens einmal mittels der Mahlwalzen zerkleinerter Rohstoff vom Sichter der Mühle-Sichter-Kombination als abgewiesenes Grobgut, welches auch als Grieß bezeichnet wird, dem Mahlteller der Vertikalmühle zum weiteren Zerkleinern mittels der Mahlwalzen wieder zugeführt.

Zum Ausführen des gattungsgemäßen Verfahrens sind Anlagenanordnungen zum Aufbereiten eines Rohstoffes bekannt, welche eine Mühle-Sichter-Kombination besitzen. Hierbei weist die Mühle-Sichter-Kombination einen Sichter und eine Vertikalmühle auf, welche wiederum einen Mahlteller und mehrere Mahlwalzen, die bevorzugt gegenüberliegend und paarweise angeordnet sind, hat. Die Mühle-Sichter-Kombination ist zum Zerkleinern des Rohstoffes auf eine Feinheit zwischen D50 = 3 µm und D50 = 12 µm als Mahlprodukt mittels der Mahlwalzen ausgebildet.

Ferner ist die Mühle-Sichter-Kombination derart ausgebildet, dass bei einer ersten Sichtung mindestens einmal mittels der Mahlwalzen zerkleinerter Rohstoff vom Sichter der Mühle-Sichter-Kombination als abgewiesenes Grobgut dem Mahlteller der Vertikalmühle zum weiteren Zerkleinern mittels der Mahlwalzen wieder zugeführt wird.

Ein ähnliches Verfahren ist beispielsweise aus EP 0 696 558 A1 bekannt. Dieses Verfahren wird zum Herstellen einer Feinstzement-Bindemittelmischung eingesetzt. Hierbei wird Klinker mittels einer Kugelmühle solange aufgemahlen, bis er die notwendige geforderte Feinheit aufweist. Selbiges ist dort auch für Hüttensand beschrieben, um Hüttensand-Feinstmehl zu erzeugen. Das Verfahren und die entsprechende Anlage ermöglichen zwar das Erzeugen von feinstaufgemahlenem Klinker und Hüttensand, jedoch zu deutlich erhöhten Kosten verglichen mit den Herstellungskosten von normalem Zement.

Als Hüttensand wird schnell abgekühlte und glasig erstarrte Hochofenschlacke bezeichnet. Sie ist also ein Nebenprodukt aus der Roheisenherstellung im Hochofen. Zerkleinerter Hüttensand wird bereits seit über 100 Jahren als Bestandteil von Komposit-Zementen verwendet. Kompositzemente sind Zemente, die neben dem Hauptbestandteil Portland-Zementklinker ein oder mehrere weitere Hauptbestandteile aufweisen. Kompositmaterialien als weiterer Hauptbestandteil im Zement werden mittlerweile unter anderem mit dem Ziel der Reduzierung von CO₂-Emissionen verwendet, da bei der Herstellung der Kompositmaterialien im Verhältnis zur Herstellung von Portland-Klinker deutlich weniger CO₂-Emissionen entsteht. Ein Beispiel für ein Kompositmaterial ist Hüttensand.

Neben Hochofenschlacken aus der Roheisenherstellung fallen bei der Stahlerzeugung unter anderem Stahlwerkschlacken an, welche auch als LD-Schlacken bezeichnet werden, da sie aus der Schmelze nach dem Linz-Donawitz-Verfahren entstehen. Sie werden ebenfalls als BOF-Schlacken (Basic Oxygen Furnace) bezeichnet. LD-Schlacken weisen einen Gehalt an Klinkerphasen auf, der grundsätzlich auch für eine Verwendung als Kompositmaterial in Kompositzementen in Frage kommen könnte. Beispielsweise sind zwischen 3 M.-% und 8 M.-% Alit (C₃S, Tricalciumsilikat) und zwischen 18 M.-% und 26 M.-% Belit (C₂S, Dicalciumsilikat) vorhanden. Auch die enthaltene Glasphase von 5 M.-% bis 40 M.-% kann als potentiell reaktiv angesehen werden. Jedoch ist es noch nicht gelungen, LD-Schlacken derart aufzubereiten, dass die hydraulischen Eigenschaften der vorhandenen Klinker- und Glasphasen verwendet werden können. Aus diesem Grund werden LD-Schlacken anders als Hüttensande gegenwärtig nicht als Hauptbestandteil im Zement sondern lediglich als Füller im Straßenbau und in geringem Maße auch als Dünger eingesetzt. Abhängig von weiteren Zusatzkomponenten ist es jedoch aufgrund neuerer Bestimmungen nicht mehr möglich, diese Verwendung weiterzuführen, was zu einer zunehmenden Deponierung der LD-Schlacken führt. Allerdings stellt sich die Deponierung aufgrund aktueller EU-Umweltregulierungen als problematisch dar, da durch die geforderten Umweltstandards bereits auch eine Deponierung teilweise nicht mehr erfolgen darf. WO-2011/107124-A1 offenbart eine Anlagenordnung mit einer Mühle-Sichter-Kombination, einem Zyklon bzw. einer Zyklonbatterie und einem Filter.

Der Erfindung liegt die Aufgabe zugrunde, ein Verfahren zum Aufbereiten und Aktivieren eines Rohstoffes, welcher latent hydraulische, hydraulische, inerte oder puzzolanische Eigenschaften aufweist, anzugeben, das effizient und kostengünstig ausgeführt werden kann. Dies betrifft auch die Aufbereitung und Aktivierung von bislang für Zemente nicht genutzten LD-Schlacken. Diese Aufgabe wird erfindungsgemäß durch ein Verfahren zum Aufbereiten und Aktivieren eines Rohstoffes mit den Merkmalen des Anspruchs 1 gelöst.

Vorteilhafte Ausführungsformen der Erfindung sind in den Unteransprüchen und der Beschreibung sowie in den Figuren und deren Erläuterung angegeben.

Bei dem erfindungsgemäßen Verfahren wird beim normalen Mahlvorgang ein Teil des Mahlproduktes mittels der Mahlwalzen auf einen Durchmesser von < 5 µm zerkleinert, wobei bei einem Rohstoff mit potentiell reaktiven Eigenschaften vorhandene puzzolanische, latent hydraulische oder hydraulische aktive Phasen freigelegt werden. Nach der Zerkleinerung und der ersten Sichtung in der Mühle-Sichter-Kombination wird das Mahlprodukt einer weiteren Sichtung in Fein- und Feinstkorn in einem Feinstkornsichtaggregat unterzogen.

Hierbei wird das Feinstkornsichtaggregat mit einer Trenngrenze betrieben und eingestellt, um Feinstkorn mit einer Feinheit kleiner D50 = 6 µm vom Mahlprodukt abzutrennen. Das Feinkorn wird nach der Sichtung im Feinstkornsichtaggregat aus dem Aufbereitungsverfahren abgezogen und kann einer baustofftechnischen Verwendung zugeführt werden. Das Feinstkorn wird nach der zweiten Sichtung einem Filter zugeführt.

Dies geschieht mittels eines Prozessluftstroms, der von der Mühle-Sichter-Kombination über das Feinstkornsichtaggregat zum Filter geführt wird. Mittels des Filters wird das Feinstkorn aus dem Prozessluftstrom abgeschieden und kann dann einer Verwendung als Kompositmaterial im Zement zugeführt werden, wobei in dem Feinstkorn bei einem Rohstoff mit potentiell reaktiven Eigenschaften mindestens ein Teil der puzzolanischen, latent hydraulischen oder hydraulisch aktiven Phase durch das Freilegen aktiviert wird und/oder durch die deutlich erhöhte Partikeloberfläche eine erhöhte Gesamtreaktivität erzielt wird.

Im Sinne der Erfindung wird als Rohstoff mit hydraulischen Eigenschaften ein Rohstoff bezeichnet, der zusammen mit Wasser aushärtet, wie auch unter Wasser aushärtet und nach der Erhärtung wasserfest ist. Ein Beispiel hierfür ist Portland-Zementklinker, bei dem die Zementphasen Alit und Belit für eine Aushärtung sorgen. Rohstoffe mit latent hydraulischen Eigenschaften härten ebenfalls bei Zugabe von Wasser aus, allerdings nur, wenn zu Beginn der Reaktion beispielsweise ein alkalischer oder sulfatischer Anreger anwesend ist. Hüttensand ist beispielsweise ein Rohstoff mit latent hydraulischen Eigenschaften.

Als ein Rohstoff mit inerten Eigenschaften wird im Rahmen der Erfindung ein Rohstoff angesehen, der an den Reaktionen mit Wasser weitgehend unbeteiligt ist. Ein inertes Kompositmaterial stellt beispielsweise Kalkstein dar. Des Weiteren wird ein Rohstoff mit puzzolanischen Eigenschaften im Rahmen der Erfindung als ein Rohstoff betrachtet, welcher mit Wasser zu festigkeitsbildenden Hydratphasen reagiert, wenn permanent Calciumhydroxid als Reaktionspartner zur Verfügung steht. Einen typischen Vertreter für puzzolanische Stoffe bildet Steinkohlenflugasche. Im Sinne der Erfindung kann die Bezeichnung "Rohstoff mit potentiell reaktiven Eigenschaften" dahingehend verstanden werden, dass der Rohstoff ein Potential an puzzolanischen, latent hydraulischen oder auch hydraulischen Eigenschaften aufweist. Demnach ist in Sinne der Erfindung auch beispielsweise ein potentiell hydraulischer Rohstoff ein Rohstoff der zwar grundsätzlich das Potential hat, hydraulisch zu sein, da er zum Beispiel Alit aufweist, jedoch diese Eigenschaft bis jetzt noch nicht genutzt beziehungsweise aktiviert werden konnte.

Das Aktivieren eines Rohstoffes mit potentiell reaktiven Eigenschaften im Sinne der Erfindung kann dahingehend verstanden werden, dass durch eine Ver- oder Bearbeitung des Rohstoffes die potentiell reaktiven Phasen derart manipuliert werden, dass sie bei der Verwendung im Kompositzement einen signifikanten Festigkeitsbeitrag leisten.

Das erfindungsgemäße Verfahren verwendet eine Mühle-Sichter-Kombination, die einen Sichter und eine Vertikalmühle aufweist. Die Vertikalmühle selbst weist mehrere, meist paarweise gegenüberliegend angeordnete und gekoppelte, Mahlwalzen auf, welche auf einem Mahlteller abrollen. Der zu zermahlende beziehungsweise zerkleinernde Rohstoff wird der Vertikalmühle aufgegeben und gelangt auf den drehenden Mahlteller, auf dem er ein Mahlbett ausbildet. Auf diesem Mahlbett rollen die stationär angeordneten Mahlwalzen, welche drehbar ausgeführt sind, ab und zerkleinern somit den aufgegebenen Rohstoff, welcher auch als Mahlgut bezeichnet wird.

Es sind verschiedene Betriebsweisen für eine Mühle-Sichter-Kombination bekannt. Zum einen kann sie als Überlaufmühle betrieben werden, bei der zerkleinertes Mahlgut vom Mahlteller aufgrund der Schwerkraft nach unten fällt und dann mittels einer Fördereinrichtung einem Sichter zugeführt wird. Zum anderen ist eine Betriebsweise als Luftstrommühle bekannt, in der vom Mahlteller überlaufendes, zumindest teilweise zerkleinertes Mahlgut mittels eines Luftstromes nach oben in Richtung des oberhalb des Mahltellers angeordneten Sichters befördert wird. Es sind jedoch auch Mahlverfahren bekannt, in denen die beiden Betriebsweisen miteinander verbunden werden.

In dem Sichter der Mühle-Sichter-Kombination findet eine erste Sichtung statt. Hierbei wird noch nicht klein genug zerkleinertes Mahlgut, welches normalerweise zumindest einmal bereits von den Mahlwalzen zerkleinert wurde, und somit einmal zerkleinerten Rohstoff darstellt, als Grobgut, welches auch als Grieß bezeichnet wird, im Sichter abgewiesen und dem Mahlteller der Vertikalmühle für eine erneute Zerkleinerung zugeführt. Bereits ausreichend zerkleinerter Rohstoff wird aus der Be-und Verarbeitung in der Mühle-Sichter-Kombination ausgeschleust.

Der Erfindung liegt ein Grundgedanke zugrunde, dass die Verwendung einer Vertikalmühle, insbesondere einer Vertikalwälzmühle, beispielsweise des LOESCHE-Typs, vorteilhaft für das Erzeugen von Feinstkorn mit einer Feinheit kleiner D50 = 6 µm und einer anschließenden zweiten Sichtung nach der für die Mahlung erforderlichen Sichtung ist.

Hierbei liegt der Erfindung die Erkenntnis zugrunde, dass es bei der Verwendung von Vertikalmühlen in einer Mühle-Sichter-Kombination relativ kostengünstig möglich ist, ein Mahlprodukt mit einer Feinheit zwischen D50 = 3 µm und D50 = 12 µm herzustellen. Die Herstellung eines Mahlproduktes mit einer derartigen Feinheit erfordert insbesondere verglichen mit herkömmlichen Verfahren mit Kugelmühlen einen deutlich geringeren Energiebedarf. So kann beim Betrieb einer Mühle-Sichter-Kombination zum Herstellen eines Mahlproduktes mit der oben angegebenen Feinheit auch ein nicht zuvernachlässigender Teil des Rohstoffes so zerkleinert werden, dass er einen Durchmesser von < 5 µm aufweist. Dieser Produktteil weist dann eine Feinheit wie herkömmliche, feinstzerkleinerte Materialien, wie beispielsweise Feinstklinker oder Feinsthüttensand, auf.

Diese Streuung macht sich die Erfindung zu Nutze, indem sie aus dem Mahlprodukt, welches grundsätzlich in der Gesamtheit im Vergleich zu Feinstzement nicht besonders fein aufgemahlen wird, einen Teil abtrennt, welcher die notwendige Feinheit für feinstaufgemahlene Materialien aufweist.

Diese Abtrennung wird gemäß der Erfindung in einem Feinstkornsichtaggregat im Sinne einer zweiten Sichtung des Mahlproduktes durchgeführt.

Verfahrenstechnisch wird die Förderung des Mahlproduktes von der Mühle-Sichter-Kombination über das Feinstsichtaggregat zu einem nachgeschalteten Filter mittels eines Prozessluftstromes durchgeführt. Im Filter wird dann das Feinstkorn, welches nicht im Feinstkornsichtaggregat abgetrennt wurde, aus dem Prozessluftstrom abgeschieden.

Als Produkt liegt nach dem Feinstkornsichtaggregat, als das von diesem abgeschiedene Material, ein Produkt als Feinkorn vor. Dieses weist eine Partikelgrößenverteilung von größer D50 = 8 µm auf und wird im Folgenden als Feinkorn oder Feingut bezeichnet. Das im Filter abgeschiedene Material weist eine Feinheit von kleiner D50 = 6 µm auf und beinhaltet somit einen Großteil des Materials, welches in der Mühle-Sichter-Kombination auf einen Durchmesser von < 5 µm zerkleinert wurde. Dieses Material wird im Folgenden als Feinstkorn oder Feinstgut bezeichnet.

Mit dem erfindungsgemäßen Verfahren ist es somit möglich, ohne zusätzlichen Arbeitsaufwand ein Feinkornprodukt sowie ein Feinstkornprodukt herzustellen, welche beide jeweils separat einer Verwendung, beispielsweise in der Baustoffindustrie, zugeführt werden können.

Bei der Vermahlung von Portland-Zementklinker kann somit herkömmlicher Klinker als Feinkorn und zusätzlich feinstaufgemahlener Klinker als Feinstkorn hergestellt werden, ohne dass zusätzliche Arbeitsschritte notwendig sind. Durch das Verwenden einer Vertikalwälzmühle kann dies ohne wesentlich erhöhten Energieaufwand im Vergleich zu der normalen Herstellung von gemahlenem Zementklinker erreicht werden. Dies gilt auch bei der Vermahlung von anderen hydraulischen, latent hydraulischen, inerten oder puzzolanischen Rohstoffen wie beispielsweise Hüttensand, Flugasche, calcinierten Ton oder Kalkstein.

Eine weitere Erkenntnis der Erfindung resultiert aus den spezifischen Eigenschaften von potentiell latent-hydraulischen oder potentiell hydraulischen Rohstoffen wie LD-Schlacken. Diese weisen, wie bereits beschrieben, zwar grundsätzlich reaktive Phasen (Alit, Belit, Glasphase) auf. Jedoch ist es bisher noch nicht gelungen, diese potentiell reaktiven Phasen zu aktivieren. Das heißt, es war bis jetzt noch nicht bekannt, wie LD-Schlacken nachbearbeitet oder behandelt werden müssen, damit die potentiell reaktiven Eigenschaften aktiviert werden können.

Im Rahmen der Erfindung wurde erkannt, dass die für die Hydraulizität interessanten Klinkerphasen Alit- und Belit und Glasphase(n) in den LD-Schlacken meist von Wüstit und/oder anderen nicht oder weniger reaktiven Phasen umwachsen sind. Durch die Feinstaufmahlung mittels des erfindungsgemäßen Verfahrens wird erreicht, dass die für die Hydraulizität interessanten Klinker- und Glasphase(n) freigelegt werden. Dieses Freilegen und die aufgrund der Feinstmahlung hohe Feinheit dieser Phasen führen dazu, dass die LD-Schlacke bei der Hydratation mit Wasser einen signifikanten eigenständigen Festigkeitsbeitrag liefert. Dadurch können LD-Schlacken, die bis jetzt als niederwertige Baustoffe verwendet wurden, nun auch als Kompositmaterial in Zement verwendet werden, da zumindest ein Teil der potentiell reaktiven Phasen durch das Freilegen aktiviert werden. Dies bedeutet, dass LD-Schlackenfeinstkorn in der Zementindustrie als hochwertiges Kompositmaterial eingesetzt werden kann.

Bei der Zerkleinerung von Portland-Zementklinker ergibt sich der Vorteil, dass bei dem Feinstkornprodukt durch die deutlich erhöhte Summe der Partikeloberflächen im Vergleich zum Feinkornprodukt eine erhöhte Gesamtaktivität erzielt werden kann. Die deutlich erhöhte Partikeloberfläche hat auch bei anderen Rohstoffen als Portlandzementklinker den Effekt, dass beim Feinstkornprodukt eine erhöhte Gesamtaktivität erzielt werden kann. Aus monetärer Sicht hat dies zur Folge, dass Rohstoffe und Zemente aus dieser Feinstaufmahlung zu deutlich höheren Preisen angeboten werden können, da sie eine höhere Leistungsfähigkeit aufweisen.

Der D50-Wert beschreibt die Partikelgrößenverteilung bei einer Kornverteilung, bei der 50 M.-% größer und 50 M.-% kleiner als der angegebene Durchmesser des Grenzkornes sind. Insbesondere bei den hier vorliegenden Feinheiten hat sich herausgestellt, dass diese Größe besser geeignet ist als die übliche spezifische Oberfläche nach Blaine.

Mittels des erfindungsgemäßen Verfahrens kann daher beispielsweise bei der Aufbereitung von Portlandzementklinker herkömmlicher zerkleinerter Klinker als Feinkorn und als zweites Produkt Feinstklinker für eine hochwertige Verwendung als Spezialzement gewonnen werden. In ähnlicher Weise kann bei dem Verwenden von Hüttensand als Rohstoff zum einen herkömmlich zerkleinerter Hüttensand erzeugt werden aber zusätzlich auch feinstzerkleinerter Hüttensand, der als hochwertiger Betonzusatzstoff beziehungsweise Zementkompositmaterial verwendet werden kann.

Auch können durch das erfindungsgemäße Verfahren Multikompositzemente höherer Leistungsfähigkeit hergestellt werden. Dabei können Fein- und Feinstfraktionen von verschiedenen Kompositmaterialien, wie Hüttensand, Flugasche, Kalksteinmehl, und von Zementklinker erzeugt werden und so miteinander vermischt werden, dass bezüglich unterschiedlicher Leistungskriterien, wie der Verarbeitbarkeit, der Festigkeit und/oder der Dauerhaftigkeit, eine ideale Korngrößenverteilung entsteht. Die erfindungsgemäße Fein- und Feinstmahlung von Kalksteinmehlen führt ebenso zu hochwertigen Bindemitteln und Zementen. So kann die Feinfraktion zur Herstellung von leistungsstarken Portlandkalksteinzementen oder kalksteinhaltigen Multikompositzementen genutzt werden, während die Feinstfraktion als heterogener Keimbildner für beschleunigte Zemente und Betone eingesetzt werden kann.

Grundsätzlich kann das Feinstkornsichtaggregat mit einer beliebigen Trenngrenze betrieben und eingestellt werden. Es hat sich jedoch als vorteilhaft herausgestellt, wenn diese Grenze bevorzugt derart eingestellt wird, dass nach dem Filter 10% bis 20% der Masse des Rohstoffes als Feinstkorn aus dem Prozessluftstrom abgeschieden werden können. Der Bereich von 10% bis 20% der Masse des Rohstoffes ist daher vorteilhaft, da ungefähr 5% bis 10% des Rohstoffes durch die Mahlwalzen auf einen Durchmesser von < als 5 µm zerkleinert werden, und so das Feinstkorn eine Partikelgrößenverteilung von kleiner D50 = 6 µm aufweisen kann.

Grundsätzlich wäre es zwar auch möglich, den prozentualen Anteil des Feinstkorns zu erhöhen. Dies hätte jedoch zur Folge, dass in der Mühle-Sichter-Kombination der Rohstoff beziehungsweise das Mahlgut stärker zerkleinert werden müsste, was wiederum einen deutlich erhöhten Energiebedarf zur Folge hätte. Bei einem Bereich von 10 M.-% bis 20 M.-% des Rohstoffes als Feinstkorn kann die Herstellung des Feinstkorns im Wesentlichen ohne einen erhöhten Energieaufwand in der Mühle-Sichter-Kombination durchgeführt werden, wodurch sich gerade die Vorteile des erfindungsgemäßen Verfahrens verdeutlichen.

Als Feinstkornsichtaggregat können Zyklonanordnungen oder mehrere parallel geschaltete Feinstsichter eingesetzt werden. Als Zyklonanordnungen können insbesondere Multizyklone oder auch Zyklonbatterien zum Einsatz kommen. Zyklone werden auch als Fliehkraftabscheider bezeichnet. Vorteilhaft bei der Verwendung von Zyklonanordnungen ist es, dass diese im Vergleich zu dynamischen Sichtern keine beweglichen Teile aufweisen. Außerdem besitzen sie eine gute Trennschärfe und sind relativ einfach zu steuern.

Als vorteilhaft hat sich das erfindungsgemäße Verfahren bei der Verwendung von Rohstoffen herausgestellt, deren reaktive Bestandteile durch nicht oder wenig reaktive Bestandteile überwachsen sind und die somit zunächst kein ausgeprägtes Erhärtungsvermögen mit Wasser aufweisen. Zu nennen ist hier beispielsweise LD-Schlacke. Durch das erfindungsgemäße Verfahren wird dieser Nachteil überwunden.

Dies liegt insbesondere daran, dass, wie bereits beschrieben, erkannt wurde, dass bei diesen Rohstoffen die herkömmlicherweise nicht zugänglichen potentiell reaktiven Phasen durch die Feinstaufmahlung freigelegt werden können. Durch dieses Freilegen können sie einen deutlichen Festigkeitsbeitrag bei der Verwendung im Zement leisten, so dass auch diese Rohstoffe zukünftig als Hauptbestandteil im Zement eingesetzt werden können.

Grundsätzlich kann die Mahlung des Rohstoffes in der Mühle-Sichter-Kombination ohne den Zusatz weiterer Stoffe erfolgen. Es hat sich jedoch als vorteilhaft herausgestellt, wenn Mahlhilfen zugegeben werden, die beispielsweise den Energieaufwand bei der Mahlung verringern und/oder eine chemische Aktivierung der hydraulischen Phasen herbeiführen. Hierbei kann es sich beispielsweise um aminhaltige Mahlhilfen mit und ohne geringen Anteil von chloridhaltigen Salzen handeln. Beispiele hierfür sind die beiden Mahlhilfen LS 3116 und ES 2168 aus der MasterCem-Produktreihe von BASF.

Mit derartigen Mahlhilfen kann die Mahlung energetisch optimiert werden. Zusätzlich wird durch das Hinzufügen von Aminen die Hydration des Feinstkorns aber auch des Feinkorns bei der Verwendung von LD-Schlacken-Feinstkorn angeregt. Ein Vorteil gerade beim Herstellen von Feinstkorn aus Stahlwerkschlacken ist, dass diese anders als andere Zementkomponenten kein Chlor in den Zement einführen. Daher können auch Mahlhilfen verwendet werden, die geringe Mengen an chloridhaltigen Salzen enthalten, ohne dass das Einhalten des Grenzwertes von 0,1 M.-% Chlorid im Zement gefährdet wäre.

Bevorzugt ist es, wenn das Feinkorn aus dem Feinstkornsichtaggregat über eine Einrichtung abgezogen wird, welche einen Falschlufteintrag in den Prozessluftstrom zumindest einschränkt. Beispielsweise können hierzu eine oder mehrere Zellradschleusen verwendet werden. Ein Falschlufteintrag in das Feinstkornsichtaggregat, insbesondere wenn eine Zyklonanordnung verwendet wird, ist unerwünscht, da dieser Einfluss auf die Trennschärfe beziehungsweise die Trenngrenze des Feinkornsichtaggregats hat. Außerdem würde sich somit die gesamte Prozessluftstrommenge erhöhen, was dann zu einem erhöhten Regelungsbedarf der gesamten Anlagenanordnung führen würde.

Bei der Verwendung von Zyklonanordnungen als Feinstkornsichtaggregat kann die Trenngrenze zwischen Fein- und Feinstkorn beispielsweise durch die Strömungsgeschwindigkeit in den Zyklonen der Zyklonanordnungen beeinflusst werden. So führt ein Erhöhen der Strömungsgeschwindigkeit in einem Zyklon zum Erhöhen der Feinheit des Feinstkorns. Umgekehrt führt ein Herabsenken der Strömungsgeschwindigkeit in einem Zyklon zum Verringern der Feinheit des Feinstkorns.

Die Strömungsgeschwindigkeit in den Zyklonen kann beispielsweise durch Erhöhen der gesamten Prozessluftstrommenge und/oder Reduzieren der Anzahl der aktiven Zyklone der Zyklonanordnungen erhöht werden. Durch die gesamte Erhöhung der Prozessluftstrommenge des Prozessluftstromes, welcher von der Mühle-Sichter-Kombination über die Zyklonanordnungen zu dem Filter führt, kann dies relativ leicht realisiert werden. Hierzu kann insbesondere eine Regelung des Mühlengebläses beziehungsweise eines Gebläses für die Prozessluftströmung verwendet werden.

Eine Verringerung der Anzahl der aktiven Zyklone führt dazu, dass die vorhandene Prozessluftstrommenge durch weniger Zyklone geleitet wird. Dies hat zur Folge, dass damit die Strömungsgeschwindigkeit in den wenigeren aktiven Zyklonen zwangsweise erhöht wird.

Eine andere Möglichkeit, die zusätzlich oder alternativ hierzu verwendet werden kann, ist, die Prozessluftstrommenge im Bereich der Zyklonanordnungen durch Rückführen eines Teils der Prozessluft von stromabwärts des Filters und Einspeisen des abgezweigten Teils der Prozessluft stromaufwärts der Zyklonanordnungen geschehen.

Grundsätzlich ist es auch denkbar, Frischluft stromaufwärts der Zyklonanordnungen in den Prozessluftstrom einzuspeisen, um die Prozessluftstrommenge zu erhöhen. Grundsätzlich kann das Einspeisen der Frischluft oder der abgezweigten Prozessluft an einer beliebigen Stelle stromaufwärts der Zyklonanordnungen geschehen. Vorteilhaft ist es, wenn dies kurz vor den Zyklonanordnungen geschieht, da anderenfalls in manchen Bereichen unnötig viel Prozessluft transportiert wird, was wiederum beim Auslegen der Querschnitte der Leitungen berücksichtigt werden müsste.

Um die Strömungsgeschwindigkeit in den Zyklonen der Zyklonanordnungen zu verringern, können verschiedene Methoden eingesetzt werden. Beispielsweise ist es möglich, die Strömungsgeschwindigkeit durch Reduzieren der gesamten Prozessluftstrommenge zu verringern. Hierzu können vorhandene Gebläse, beispielsweise die oder das Mühlengebläse, eingesetzt und entsprechend geregelt werden. Eine weitere Möglichkeit ist, die Anzahl der aktiven Zyklone der Zyklonanordnungen zu erhöhen. Hierdurch muss die vorhandene Prozessluftstrommenge durch mehrere, insbesondere parallel geschaltete, Zyklone aufgeteilt werden, so dass insgesamt pro Zyklon eine geringere Prozessluftstrommenge vorhanden ist, was zu einer geringeren Strömungsgeschwindigkeit führt.

Eine andere Möglichkeit ist es, gezielt Trichterluft in die Zyklone der Zyklonanordnungen zuzuführen, wodurch ebenfalls die Strömungsgeschwindigkeit gesenkt wird. Das Zuführen von Trichterluft verringert die Geschwindigkeit des im Zentrum eines Zyklons befindlichen Wirbels, wodurch die Trenngrenze ins Grobe verschoben wird. Zu beachten ist hierbei jedoch, dass ab ca. 20% Anteil der Trichterluft am Gesamtprozessluftstrom durch einen Zyklon keine ausreichende Trennung in dem Zyklon mehr stattfindet.

Es ist auch möglich, die Prozessluftmenge in den Zyklonen der Zyklonanordnungen durch Ableiten eines Teils der Prozessluft von stromaufwärts der Zyklonanordnungen und Einspeisen des Teiles der Prozessluft stromabwärts der Zyklonanordnungen zu verringern. Ein Teil der Prozessluft wird also in einem Bypass an den Zyklonanordnungen vorbeigeleitet.

Das erfindungsgemäße Verfahren wird mit einer Anlagenanordnung durchgeführt, welche eine Mühle-Sichter-Kombination aufweist. Hierbei hat die Mühle-Sichter-Kombination einen Sichter und eine Vertikalmühle, welche wiederum zumindest einen Mahlteller und mehrere insbesondere stationär und drehbar angeordnete Mahlwalzen aufweist. Die Mühle-Sichter-Kombination ist zum Zerkleinern des Rohstoffes auf eine Feinheit zwischen D50 = 3 µm und D50 = 12 µm als Mahlprodukt mittels der Mahlwalzen ausgelegt. Hierbei ist die Mühle-Sichter-Kombination ausgebildet, um bei einer ersten Sichtung mindestens einmal mittels der Mahlwalzen zerkleinerten Rohstoff vom Sichter der Mühle-Sichter-Kombination als abgewiesenes Grobgut dem Mahlteller der Vertikalmühle zur weiteren Zerkleinerung mittels der Mahlwalzen wieder zuzuführen.

Die Mühle-Sichter-Kombination ist derart ausgebildet, dass ein Teil des Mahlproduktes hierbei auf einen Durchmesser von < 5 mm zerkleinert wird, wobei bei einem Rohstoff mit potentiell reaktiven Eigenschaften puzzolanische, latent hydraulische oder hydraulische Phasen freigelegt werden. Ferner sind ein Feinstkornsichtaggregat und ein Filter vorgesehen. Eine geführte Prozessluftströmung führt von der Mühle-Sichter-Kombination über das Feinstkornsichtaggregat zum Filter und ist zum Transport des in der Mühle-Sichter-Kombination zerkleinerten Rohstoffes eingerichtet. Hierbei ist das Feinstkornsichtaggregat zum Sichten des Mahlproduktes in einer weiteren Sichtung in ein Fein und ein Feinstkorn ausgelegt. Das Feinstkornsichtaggregat ist auf eine Trenngrenze einstellbar und betreibbar, um das Feinstkorn mit einer Feinheit von kleiner D50 = 6 mm abzutrennen. Der Filter ist zum Abscheiden von Feinstkorn aus dem Prozessluftstrom von dem Feinstkornsichtaggregat kommend ausgebildet.

Ein Grundgedanke einer Anlagenanordnung kann darin gesehen werden, dass erkannt wurde, dass es zum Erzeugen eines Produktes als Feinstkorn nicht notwendig ist, den gesamten Rohstoff als Feinstkorn aufzuarbeiten beziehungsweise zu zerkleinern. Entsprechend der Erfindung ist es vorgesehen, einen Teil des Rohstoffes als Feinkorn zu zerkleinern und lediglich einen geringeren Teil derart zu zerkleinern, dass er als Feinstkorn weiterverwendet werden kann. Hierdurch wird erreicht, dass deutlich weniger Energie eingesetzt werden muss, um Feinstkorn herzustellen, als wenn der gesamte Rohstoff zu Feinstkorn zerkleinert wird. In diesem Zusammenhang hat sich die Verwendung einer Vertikalmühle, insbesondere eine Vertikalwälzmühle beispielsweise des LOESCHE-Typs, als vorteilhaft herausgestellt, da diese bei einer beispielsweise gewünschten Produktfeinheit nach der Mühle-Sichter- Kombination zwischen D50 = 3mm und D50 = 12 mm einen Teil des Mahlproduktes auf einen Durchmesser von < 5 mm zerkleinert. Wird nun dieser Teil des Mahlproduktes mit dem Durchmesser von < 5 mm in einer zweiten Sichtung, welche mittels dem Feinstkornsichtaggregat ausgeführt wird, vom restlichen zerkleinerten Mahlprodukt abgetrennt, so kann ohne großen weiteren Aufwand ein Produkt als Feinstkornprodukt hergestellt werden.

Vorteilhaft hierbei ist, dass für dieses neben dem herkömmlichen Feinkornprodukt zusätzlich verfügbare Feinstkornprodukt im Wesentlichen keine zusätzliche Energie für die Mahlung aufgebracht werden muss. Anders ausgedrückt, kann mit einem kaum veränderten herkömmlichen Mahl- und Zerkleinerungsverfahren beziehungsweise einer entsprechenden Anlage ein zweites Produkt hergestellt werden, welches noch hochwertiger als das erste Produkt in Feinkorngröße ist.

Als Feinstkornsichtaggregat werden Zyklonanordnungen verwendet. Als Zyklonanordnungen können insbesondere Multizyklone oder Zyklonbatterien mit einem Durchmesser von maximal 700 mm bevorzugt im Bereich von 200 mm bis 500 mm verwendet werden. Die Verwendung von Zyklonanordnungen ist vorteilhaft, da diese keine oder kaum bewegliche Teile aufweisen und so relativ wartungsarm sind. Außerdem weisen Zyklone eine gute Trennschärfe auf und sind leicht zu steuern.

Bevorzugt ist es, wenn das Feinstkornsichtaggregat eine Einrichtung zum Abziehen des abgeschiedenen Feinkorns aufweist, welche einen Fehllufteintrag in den Prozessluftstrom zumindest einschränkt. Hierzu können beispielsweise eine oder mehrere Zellradschleusen verwendet werden. Insbesondere bei der Verwendung von Zyklonanordnungen ist ein Fehllufteintrag unerwünscht, da dieser die Trenngrenze in den Zyklonanordnungen beeinflussen würde. Andererseits ist es auch unerwünscht, zusätzliche Fehlluft in den Prozessluftstrom einzuspeisen, da hierdurch die Prozessluftstrommenge, welche eine relevante Regelgröße ist, erhöht wird, was wiederum zu notwendigen Nachregelungen führen würde.

Vorteilhafterweise sind steuerbare Prozessgasrückführleitungen von stromabwärts des Filters nach stromaufwärts der Zyklonanordnungen vorgesehen. Diese Rückführleitungen können dazu verwendet werden, die Prozessluftstrommenge, welche durch die Zyklonanordnungen strömt, zu beeinflussen. Über die Prozessluftstrommenge kann die Trenngrenze zwischen Feinkorn und Feinstkorn in Zyklonanordnungen beeinflusst werden.

Außerdem kann eine Bypass-Leitung von, insbesondere direkt, stromaufwärts der Zyklonanordnungen nach stromabwärts der Zyklonanordnungen vorgesehen sein. Diese Bypass-Leitung kann ebenso dazu verwendet werden, die Prozessluftstrommenge, welche durch die Zyklonanordnungen strömt, zu beeinflussen, indem Prozessluft an den Zyklonanordnungen vorbeigeleitet wird.

Die Erfindung wird nachfolgend anhand eines schematischen Ausführungsbeispieles unter Bezugnahme auf die weiteren Figuren näher erläutert. Hierbei zeigen:
- Fig. 1: ein schematisches Flussdiagramm einer Anlagenanordnung;
- Fig. 2: eine vereinfachte Korngrößenverteilung nach einer Mühle-Sichter-Kombination;
- Fig. 3: eine vereinfachte Korngrößenverteilung nach einem Feinstkornsichtaggregat;
- Fig. 4: ein Diagramm zu Festigkeitsuntersuchungen von feinstaufgemahlener LD-Schlacke; und
- Fig. 5: ein Diagramm zu Festigkeitsuntersuchungen von feinstaufgemahlenem Hüttensand.

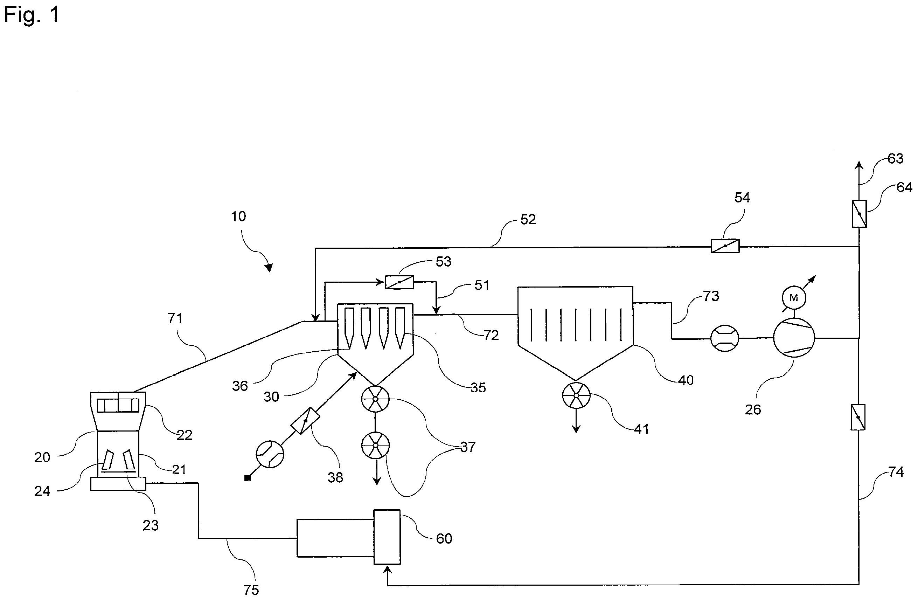

In Fig. 1 ist ein Flussdiagramm einer Anlagenanordnung 10 in schematischer Weise dargestellt. Die Anlagenanordnung 10 weist als wesentliche Elemente eine Mühle-Sichter-Kombination 20, ein Feinstkornsichtaggregat 30 sowie einen Filter 40 auf.

Die Mühle-Sichter-Kombination 20 besteht aus einer Vertikalmühle 21 und einem Sichter 22. Die Vertikalmühle 21 weist einen angetriebenen Mahlteller 23 und mehrere Mahlwalzen 24 auf, welche stationär angeordnet und drehbar ausgebildet sind. Während des Mahlvorgangs wird mittels des aufgegebenen Mahlgutes auf dem Mahlteller 23 ein Mahlbett gebildet, auf dem die Mahlwalzen 24 abrollen und somit das Mahlgut zerkleinern.

Anschließend wird das zerkleinerte Mahlgut mittels eines Luftstroms zum Sichter 22 gefördert. In diesem findet eine Sichtung des Mahlgutes in Grob- und Feinkorn statt. Grobgut wird vom Sichter 22 abgewiesen und für eine erneute Übermahlung zurück auf den Mahlteller 23 der Vertikalmühle 21 geleitet.

Hierbei kann die Mühle-Sichter-Kombination 20 grundsätzlich sowohl als Überlaufmühle wie auch als Luftstrommühle betrieben werden. In der hier dargestellten Ausführungsform ist die Mühle-Sichter-Kombination 20 als Luftstrommühle ausgeführt.

Zum Transport des zerkleinerten Mahlgutes, welches auch als Mahlprodukt bezeichnet werden kann, sind verschiedene Rohrleitungen vorgesehen. Eine erste Rohrleitung 71 führt von der Mühle-Sichter-Kombination 20 zum Feinstkornsichtaggregat 30. Von dort führt eine zweite Rohrleitung 72 zum Filter 40. Eine weitere Rohrleitung 73 führt zu einer T-Verbindung, welche einerseits zu einem Kamin 63 und andererseits zu einer vierten Rohrleitung 74 führt. Die vierte Rohrleitung 74 führt zu einem Heißgaserzeuger 60, welcher zum Erhitzen von Prozessgas eingesetzt wird, um während der Mahlung auch eine Trocknung durchzuführen. Das vom Heißgaserzeuger 60 erhitzte Prozessgas wird über eine fünfte Rohrleitung 75 zurück zur Mühle-Sichter-Kombination 20 geleitet.

Durch den Prozessgasstrom, welcher durch die Mühle-Sichter-Kombination 20 strömt, wird das nicht vom Sichter 22 abgewiesene Mahlprodukt über die erste Leitung 71 zum Feinstkornsichtaggregat 30 gefördert. Das Feinstkornsichtaggregat 30 kann grundsätzlich beliebig aufgebaut sein. In der hier schemenhaft dargestellten Ausführungsform ist es als Multizyklon 35 mit mehreren nacheinander geschalteten Zyklonen 36 ausgeführt. Anstelle eines Multizyklons 35 kann an dieser Stelle auch ein speziell für diese Aufgabe geeigneter Sichter oder mehrere parallel geschaltete kleinere Feinstsichter eingesetzt werden.

In dem Multizyklon 35 findet eine weitere Sichtung statt. Hier wird Feinkorn vom Feinstkorn abgetrennt. Das im Multizyklon 35 abgetrennte Feinkorn kann anschließend über Zellradschleusen 37 aus der Anlagenanordnung 10 abgezogen und einer Verwendung als Baustoff zugeführt werden.

Das im Multizyklon 35 nicht abgeschiedene Feinstkorn wird mittels des Prozessluftstroms über die zweite Rohrleitung 72 weiter zum Filter 40 transportiert. Hierbei kann es sich beispielsweise um einen Schlauchfilter handeln. Auch die Verwendung von Filterbatterien mit mehreren nacheinander geschalteten Filtern ist möglich.

Im Filter 40 wird das sich noch im Prozessluftstrom befindliche Feinstkorn aus diesem abgetrennt. Das Feinstkorn kann nun über eine Schleuse 41 aus der Anlagenanordnung 10 abgezogen werden.

Der Prozessluftstrom wird vom Filter 40 über die vierte Rohrleitung 74 zum Mühlengebläse 26 geleitet. Über dieses Mühlengebläse 26 kann die Strömungsgeschwindigkeit des Prozessluftstroms eingestellt werden. Anschließend an das Mühlengebläse 26 ist es möglich, einen Teil des Prozessluftstroms über den Kamin 63 auszuschleusen. Hierfür ist ein Kaminventil 64 vorgesehen. Ein anderer Teil kann über eine vierte Rohrleitung 74 dem zuvor beschriebenen Heißgaserzeuger 60 zugeführt werden, in dem die Prozessluft des Prozessluftstroms erneut erhitzt wird. Diese erhitzte Prozessluft wird dann über eine fünfte Rohrleitung 75 der Mühle-Sichter-Kombination 20 wieder zugeführt.

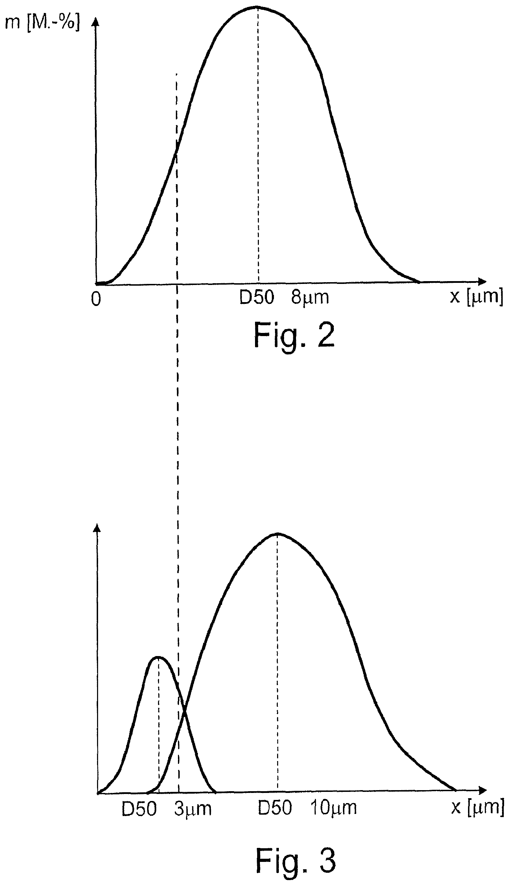

Im Folgenden wird nun auf die grundlegende Erkenntnis der Erfindung unter Bezugnahme auf die Figuren 2 und 3 näher eingegangen. Fig. 2 zeigt eine schematische Korngrößenverteilung nach der Mühle-Sichter-Kombination 20 im Bereich der ersten Rohrleitung 71. Aus Fig. 3 gehen die Korngrößenverteilung des Feinstkorns und des Feinkorns nach dem Multizyklon 35 hervor. Beide Figuren zeigen stark vereinfachte idealisierte Korngrößenverteilungen.

Entsprechend der Erfindung wurde erkannt, dass bei der Verwendung einer Mühle-Sichter-Kombination 20, welche eine Vertikalmühle 21 aufweist, die beispielsweise betrieben wird, um ein Mahlprodukt mit einer Feinheit zwischen D50 = 3 µm und D50 = 12 µm herzustellen, eine wie in Fig. 2 dargestellte Korngrößenverteilung vorhanden ist.

In dem Diagramm in den Figuren 2 und 3 ist auf der Abszisse der Durchmesser eines Korns des Mahlproduktes eingetragen. Auf der Ordinate ist die Masse der jeweiligen Kornfraktion in M.-% aufgetragen
Wie in Fig. 2 gezeigt, hat bei einer Feinheit von D50 = 8 µm 50 % der Gesamtmasse des Mahlproduktes eine Korngröße mit einem Durchmesser von über 8 µm und 50 % der Gesamtmasse des Mahlproduktes eine Korngröße mit einem Durchmesser von unter 8 µm.

Ein Mahlprodukt mit dieser Partikelgrößenverteilung wird anschließend weiter zu einer zweiten Sichtung in dem Feinstkornsichtaggregat 30 geleitet. In Fig. 3 ist die Partikelgrößenverteilung für das Feinstkorn auf der linken Seite des Diagramms und die Partikelgrößenverteilung für das Feinkorn auf der rechten Seite des Diagramms nach dem Feinstkornsichtaggregat dargestellt. Wie gezeigt, findet auch hier konstruktionsgemäß keine scharfe Trennung zwischen Fein- und Feinstkorn statt, sondern es ist gewissermaßen ein fließender Übergang vorhanden. Das so hergestellte beziehungsweise gesichtete Feinstkorn weist in diesem Beispiel eine Feinheit von D50 = 3 µm und das Feinkorn eine Feinheit von D50 = 10 µm auf.

Durch die zweite Sichtung mittels eines Feinstkornsichtaggregates 30, welches beispielsweise ein Zyklonbatterie sein kann, ist es somit möglich, bei einem normalen Mahlprozess mit einer Mühle-Sichter-Kombination 20 auch Feinstkorn zu erzeugen, ohne dass hierfür zusätzliche Energie für eine besonders feine Mahlung aufgewendet werden muss.

Wie ebenfalls aus Fig. 3 hervorgeht, liegt das Verhältnis zwischen Feinstkorn zu Feinkorn ungefähr bei 10 M.-% bis 20 M.-% zu 90 M.-% bis 80 M.-%.

Bei der Verwendung von Multizyklonen oder einer Zyklonbatterie für das Feinstkornsichtaggregat 30 ergeben sich verschiedene Möglichkeiten, um die Trennkorngrenze einzustellen. Diese werden im Folgenden unter Bezugnahme auf Fig. 1 näher erläutert.

Die Trennkorngrenze in dem Multizyklon 35 wird im Wesentlichen durch die dimensionsmäßige Auslegung der einzelnen Zyklone des Multizyklons 36 festgelegt. Sie kann jedoch im Betrieb durch den Volumenstrom des Prozessluftstroms durch jeden einzelnen Zyklon 36 beeinflusst werden. So verschiebt sich die Korntrenngrenze in Richtung Feinstkorn, wenn die Strömungsgeschwindigkeit in den einzelnen Zyklonen 36 erhöht wird. Hierzu bestehen verschiedene Möglichkeiten.

Zum einen kann die gesamte Prozessluftstrommenge pro Zeiteinheit in der gesamten Anlagenanordnung 10 erhöht werden. Hierzu ist es möglich, das Mühlengebläse 26 entsprechend zu regeln.

Zum anderen besteht die Möglichkeit, die Prozessluftmenge pro Zeiteinheit nur im Bereich des Multizyklons 35 zu erhöhen. Hierfür kann eine Rückgasleitung 52 vorgesehen sein., welche stromabwärts des Filters 40 beginnt und stromaufwärts des Multizyklons 35 endet. Zusätzlich ist ein Steuerventil 54 in der Rückgasleitung vorgesehen. Mittels der Rückgasleitung 52 ist es möglich, Prozessgas von hinter dem Filter 40 beziehungsweise von hinter dem Mühlengebläse 26 nach vor den Multizyklon 35 zu leiten und somit die Prozessgasluftmenge pro Zeiteinheit im Multizyklon 35 zu erhöhen. Mittels des Ventils 54 kann die rückgeführte Prozessluftmenge geregelt werden.

Es ist auch möglich, die Anzahl der aktiven Zyklone 36 in dem Multizyklon 35 zu verringern. Da hierbei die Prozessluftgasmenge pro Zeiteinheit nicht geändert wird, erhöht sich die Strömungsgeschwindigkeit innerhalb der aktiven Zyklone 36, was wiederum zu einer Verschiebung der Trenngrenze in Richtung Feinstkorn führt.

In ähnlicher Weise kann auch die Trenngrenze des Multizyklons 35 in Richtung des Feinkorns verschoben werden. Hierzu kann, wie zuvor analog erklärt, über das Mühlengebläse 26 die Prozessluftstrommenge pro Zeiteinheit abgesenkt werden. Eine andere Möglichkeit ist es, mehr Zyklone 36 des Multizyklons 35 zu aktivieren oder zu verwenden. Da dies bei gleicher Prozessluftmenge pro Zeiteinheit geschieht, verringert sich die jeweilige Strömungsgeschwindigkeit in jedem Zyklon 36.

Des Weiteren ist auch die Möglichkeit vorhanden, Trichterluft über ein Regelventil 38 in die einzelnen Zyklone 36 zu leiten. Auch hierdurch verringert sich die Strömungsgeschwindigkeit innerhalb der Zyklone 36.

Eine weitere Möglichkeit ist es, eine Bypass-Leitung 51 vorzusehen. Diese führt von stromaufwärts des Multizyklons 35 nach direkt stromabwärts des Multizyklons 35. Zusätzlich ist ein Regelventil 53 vorgesehen. Mittels der Bypass-Leitung 51 ist es möglich, Prozessgas von vordem Multizyklon 35 nach hinter den Multizyklon 35 zu leiten und somit die Prozessgasluftmenge pro Zeiteinheit im Multizyklon 35 zu verringern. Mittels des Ventils 54 kann die Prozessluftmenge geregelt werden.

Insbesondere bei der Aufbereitung eines potentiell reaktiven Rohstoffes wie LD-Schlacken bietet das erfindungsgemäße Verfahren einen weiteren Vorteil. Herkömmlicherweise konnten LD-Schlacken nicht als Kompositmaterial in Zement eingesetzt werden, da sie keinen Beitrag oder zumindest keinen signifikanten Beitrag für die Festigkeit aufwiesen.

Entsprechend der Erfindung wurde jedoch erkannt, dass in LD-Schlacken Klinkerphasen wie Alit oder Belit im Bereich von insgesamt 20 M.-% bis 30 M.-% und Glasphase im Bereich von 5 M.-% bis 40 M.-% vorhanden sind. Diese Phasen sind jedoch umwachsen und liegen bei einer herkömmlichen Mahlung mit einer Feinheit von gröber als D50 = 8 µm nicht frei zugänglich vor.

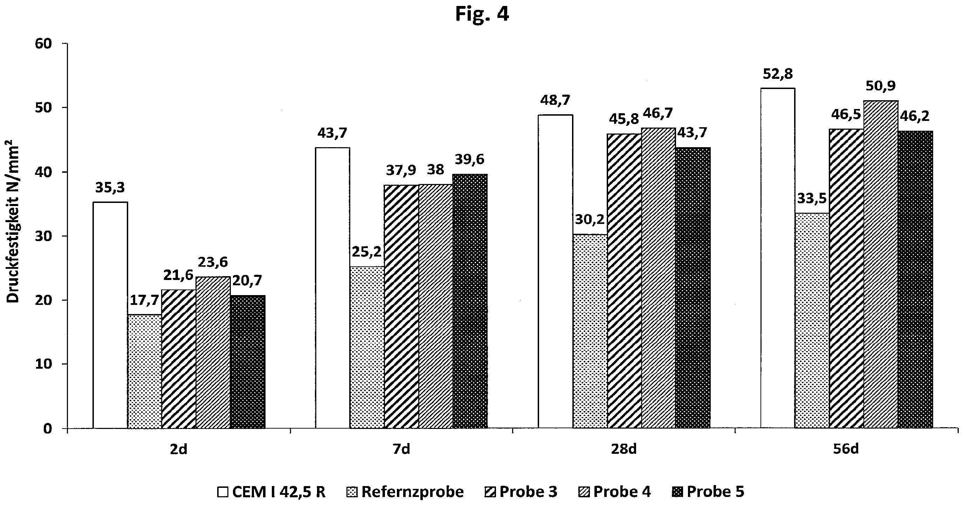

Durch das erfindungsgemäße Verfahren werden diese Phasen im Feinstkorn freigelegt, so dass sie einen Beitrag zur Festigkeit bei der Verwendung in Kompositzement liefern können. Hierzu wurden entsprechende Festigkeitsuntersuchungen gemäß DIN EN 196 an Normprismen durchgeführt. Die entsprechenden Ergebnisse sind in Fig. 4 dargestellt.

Hierbei wurde als Basiszement oder Referenzzement CEM I 42,5 R verwendet. Als Referenzprobe wurden 70 M.-% Referenzzement mit 30 M.-% Quarzsand gemischt und untersucht. Der Quarzsand wird als nicht reaktive inerte Gesteinskörnung verwendet. In der dritten, vierten und fünften Probe wurde jeweils eine Mischung von 70 M.-% Referenzzement mit 30 M.-% Feinstkorn aus LD-Schlacke untersucht. Hierbei wurde bei der Mahlung der Probe 3 keine Mahlhilfe, der Probe 4 als Mahlhilfe MasterCem ES 2168 und der Probe 5 als Mahlhilfe MasterCem LS 3116 jeweils von BASF verwendet.

Wie in Fig. 4 gezeigt, geht aus den Untersuchungen hervor, dass spätestens ab dem siebten Tag das Festigkeitsniveau der Proben 3, 4 und 5 deutlich über dem der Referenzprobe liegt. Daraus kann gefolgert werden, dass die LD-Schlacke spätestens nach sieben Tagen einen eigenen Festigkeitsbeitrag im Mischzement leistet.

In ähnlicher Weise wurden auch Festigkeitsuntersuchungen für feinstaufgemahlenen Hüttensand durchgeführt. Hierbei wurde wiederum CEM I 42,5 R als Basiszement verwendet. In der zweiten Probe wurde in diesem Fall eine 50:50 - Mischung aus Basiszement und feinstaufgemahlenen Hüttensand untersucht.

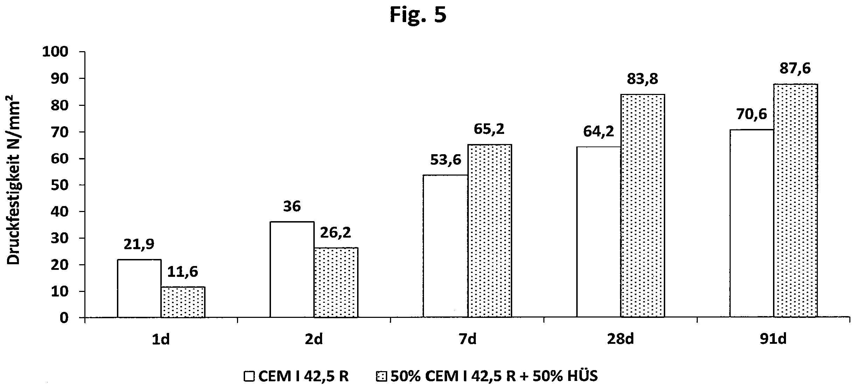

Die Untersuchungen fanden wiederum entsprechend DIN EN 196 an Normmörtel statt. Wie in Fig. 5 gezeigt, erreicht die in Probe 2 untersuchte Mischung aus Basiszement und feinstaufgemahlenem Hüttensand bereits nach dem siebten Tag eine höhere Festigkeit als der Basiszement.

Zusammenfassend kann festgehalten werden, dass es mit dem erfindungsgemäßen Verfahren möglich ist, Kompositmaterial für die Verwendung in Zement herzustellen, ohne wesentlich gesteigerte Energiekosten in Kauf zu nehmen. Durch die Feinstaufmahlung können sogar potentiell reaktive Rohstoffe aktiviert werden, die bisher als Zementkompositmaterial nicht geeignet waren.

## Patentansprüche

1. Verfahren zum Aufbereiten und Aktivieren eines Rohstoffes, welcher latent hydraulische, hydraulische, inerte oder puzzolanische Eigenschaften aufweist,
bei dem der Rohstoff mittels Mahlwalzen (24) einer Mühle-Sichter-Kombination (20) zerkleinert wird,
wobei die Mühle-Sichter-Kombination (20) einen Sichter (22) und eine Vertikalmühle (21) mit einem Mahlteller (25) und mit den Mahlwalzen (24) aufweist,
bei dem die Mühle-Sichter-Kombination (20) zum Herstellen eines Mahlproduktes mit einer Feinheit zwischen D50 = 3 µm und D50 = 12 µm eingestellt und betrieben wird und
bei dem in einer ersten Sichtung mindestens einmal mittels der Mahlwalzen (24) zerkleinerter Rohstoff vom Sichter (22) der Mühle-Sichter-Kombination (20) als abgewiesenes Grobgut dem Mahlteller (25) der Vertikalmühle (21) zum weiteren Zerkleinern mittels der Mahlwalzen (24) wieder zugeführt wird,
**dadurch gekennzeichnet,**
**dass** ein Teil des Mahlproduktes mittels der Mahlwalzen (24) auf einen Durchmesser von kleiner 5 µm zerkleinert wird, wobei bei einem Rohstoff mit potentiell reaktiven Eigenschaften vorhandene puzzolanische, latent hydraulischen oder hydraulisch aktive Phasen freigelegt werden,
**dass** das Mahlprodukt einer weiteren Sichtung in Fein- und Feinstkorn in einem Feinstkornsichtaggregat (30) unterzogen wird,
**dass** das Feinstkornsichtaggregat (30) mit einer Trenngrenze betrieben und eingestellt wird, um Feinstkorn mit einer Feinheit kleiner D50 = 6 µm abzutrennen, dass das Feinkorn aus dem Aufbereitungsverfahren abgezogen wird und einer baustofftechnischen Verwendung zugeführt wird,
**dass** das Feinstkorn einem Filter (40) zugeführt wird,
wobei ein Prozessluftstrom von der Mühle-Sichter-Kombination (20) über das Feinstkornsichtaggregat (30) zum Filter (40) geführt wird und
**dass** das Feinstkorn aus dem Prozessluftstrom mittels des Filters (40) abgeschieden wird und einer Verwendung als Kompositmaterial in Zement zugeführt wird, wobei in dem Feinstkorn bei einem Rohstoff mit potentiell reaktiven Eigenschaften zumindest ein Teil der puzzolanische, latent hydraulischen oder hydraulisch aktiven Phasen durch das Freilegen aktiviert wird und/oder durch die deutlich erhöhte Partikeloberfläche eine erhöhte Gesamtreaktivität erzielt wird.

2. Verfahren nach Anspruch 1,
**dadurch gekennzeichnet,**
**dass** das Feinstkornsichtaggregat (30) mit einer Trenngrenze betrieben und eingestellt wird, um nach dem Filter (40) 10% bis 20% der Masse des Rohstoffes als Feinstkorn aus dem Prozessluftstrom abzuscheiden.

3. Verfahren nach Anspruch 1 oder 2,
**dadurch gekennzeichnet,**
**dass** als Feinstkornsichtaggregat (30) Zyklonanordungen, wie Multizyklone (35) oder Zyklonbatterien, oder mehrere parallel geschaltete Feinstsichter eingesetzt werden.

4. Verfahren nach Anspruch 1 bis 3,
**dadurch gekennzeichnet,**
**dass** als Rohstoff LD-Schlacken, Flugasche oder Hüttensande verwendet wird.

5. Verfahren nach einem der Ansprüche 1 bis 4,
**dadurch gekennzeichnet,**
**dass** in die Mühle-Sichter-Kombination (20) Mahlhilfen, insbesondere aminhaltige Mahlhilfen mit oder ohne geringem Anteil von chloridhaltigen Salzen, zugegeben werden.

6. Verfahren nach einem der Ansprüche 1 bis 5,
**dadurch gekennzeichnet,**
**dass** das Feinkorn aus dem Feinstkornsichtaggregat (30) über eine Einrichtung abgezogen wird, welche einen Falschlufteintrag in den Prozessluftstrom zumindest einschränkt.

7. Verfahren nach einem der Ansprüche 1 bis 6,
**dadurch gekennzeichnet,**
**dass** bei der Verwendung von Zyklonanordungen zum Erhöhen der Feinheit des Feinstkorns die Strömungsgeschwindigkeit in den Zyklonen (36) der Zyklonanordnungen erhöht wird.

8. Verfahren nach Anspruch 7,
**dadurch gekennzeichnet,**
**dass** die Strömungsgeschwindigkeit durch Erhöhen der Prozessluftstrommenge und/oder Reduzieren der Anzahl der aktiven Zyklone (36) der Zyklonanordnungen erhöht wird.

9. Verfahren nach Anspruch 7,
**dadurch gekennzeichnet,**
**dass** die Prozessluftstrommenge im Bereich der Zyklonanordnungen durch Rückführen eines Teiles der Prozessluft von stromabwärts des Filters (40) und Einspeisen des Teiles der Prozessluft stromaufwärts der Zyklonanordnungen erhöht wird.

10. Verfahren nach einem der Ansprüche 1 bis 9,
**dadurch gekennzeichnet,**
**dass** bei der Verwendung von Zyklonanordnungen zum Verringern der Feinheit des Feinstkorn die Strömungsgeschwindigkeit in den Zyklonen (36) der Zyklonanordnungen herabgesenkt wird.

11. Verfahren nach Anspruch 10,
**dadurch gekennzeichnet,**
**dass** die Strömungsgeschwindigkeit durch Reduzieren der Prozessluftstrommenge, Erhöhen der Anzahl der aktiven Zyklone (36) der Zyklonanordnungen, Zuführen von Trichterluft in die Zyklone (36) der Zyklonanordnungen und/oder durch Ableiten eines Teils der Prozessluft von stromaufwärts der Zyklonanordnungen und Einspeisen des Teiles der Prozessluft stromabwärts der Zyklonanordnungen herabgesenkt wird.

## Claims

1. Method for preparing and activating a raw material which has latently hydraulic, hydraulic, inert or pozzolanic properties,
wherein the raw material is comminuted by means of grinding rollers (24) of a mill-classifier combination (20),
wherein the mill-classifier combination (20) has a classifier (22) and a vertical mill (21) with a grinding pan (25) and with the grinding rollers (24),
wherein the mill-classifier combination (20) is set and operated to produce a ground product with a fineness of between D50 = 3 µm, and D50 = 12 µm, and wherein in a first classification raw material comminuted at least once by means of the grinding rollers (24) in a first classification is fed from the classifier (22) of the mill-classifier combination (20) as rejected coarse material back to the grinding pan (25) of the vertical mill (21) for further comminution by means of the grinding rollers (24),
**characterised in that**
a part of the grinding product is comminuted by means of the grinding rollers (24) to a diameter of less than 5 µm, wherein in the case of a raw material with potentially reactive properties, existing pozzolanic, latently hydraulic or hydraulically active phases are released,
the grinding product is subjected to a further classification into fine and ultrafine grain in an ultrafine grain classifier unit (30),
the ultrafine grain classifier unit (30) is operated and set with a separation threshold in order to separate ultrafine grain with a fineness of less than D50 = 6 µm, the fine grain is removed from the preparation process and supplied for a building materials application,
the ultrafine grain is fed to a filter (40),
wherein a process air flow is guided from the mill-classifier combination (20) via the ultrafine grain classifier unit (30) to the filter (40) and
the ultrafine grain is separated from the process air flow by means of the filter (40) and fed for a use as composite material in cement,
wherein in the ultrafine grain in the case of a raw material with potentially reactive properties at least a part of the pozzolanic, latently hydraulic or hydraulically active phases is activated by the release and / or an increased overall reactivity is achieved by the significantly increased particle surface area.

2. Method according to claim 1,
**characterised in that**
the ultrafine grain classifier unit (30) is operated and set with a separation threshold in order to separate, after the filter (40), 10% to 20% of the mass of the raw material as ultrafine grain from the process air flow.

3. Method according to claim 1 or 2,
**characterised in that**
cyclone arrangements such as multi-cyclones (35) or cyclone packs or a plurality of ultrafine classifiers connected in parallel, are used as an ultrafine grain classifier unit (30).

4. Method according to claims 1 to 3,
**characterised in that**
LD slags, fly ash or granulated slags are used as raw material.

5. Method according to one of claims 1 to 4,
**characterised in that**
grinding aids, in particular amine-containing grinding aids with or without a small proportion of chloride-containing salts, are added into the mill-classifier combination (20).

6. Method according to one of claims 1 to 5,
**characterised in that**
the fine grain is removed from the ultrafine grain classifier unit (30) via a means which at least limits a false air entry into the process air flow.

7. Method according to one of claims 1 to 6,
**characterised in that**
when using cyclone arrangements to increase the fineness of the ultrafine grain the flow speed in the cyclones (36) of the cyclone arrangements is increased.

8. Method according to claim 7,
**characterised in that**
the flow speed is increased by increasing the amount of process air flow and / or reducing the number of the active cyclones (36) of the cyclone arrangements.

9. Method according to claim 7,
**characterised in that**
the amount of process air flow is increased in the region of the cyclone arrangements by recirculating a part of the process air from downstream of the filter (40) and feeding the part of the process air to upstream of the cyclone arrangements.

10. Method according to one of claims 1 to 9,
**characterised in that**
when using cyclone arrangements to reduce the fineness of the ultrafine grain the flow speed in the cyclones (36) of the cyclone arrangements is reduced.

11. Method according to claim 10,
**characterised in that**
the flow speed is reduced by reducing the amount of process air flow, increasing the number of the active cyclones (36) of the cyclone arrangements, feeding funnel air into the cyclone (36) of the cyclone arrangements and / or by removing a part of the process air from upstream of the cyclone arrangements and feeding the part of the process air downstream of the cyclone arrangements.

## Revendications

1. Procédé de préparation et d'activation d'une matière première qui présente des propriétés hydrauliques latentes, hydrauliques, inertes ou pouzzolaniques, selon lequel la matière première est fragmentée au moyen de cylindres broyeurs (24) d'un système combiné broyeur-tamis (20), cette combinaison broyeur-tamis (20) comprenant un tamis (22) et un broyeur vertical (21) avec un plateau de broyage (25) et avec les cylindres broyeurs (24), selon lequel le système combiné broyeur-tamis (20) est ajusté et utilisé pour fabriquer un produit de broyage d'une finesse comprise entre D50 = 3 µm et D50 = 12 µm et selon lequel, dans un premier tamisage, la matière première fragmentée est renvoyée au moins une fois par le tamis (22) du système combiné broyeur-tamis (20) comme matière grossière rejetée vers le plateau de broyage (25) du broyeur vertical (21) pour être davantage fragmentée,
**caractérisé**
**en ce qu'**une partie du produit de broyage est fragmentée au moyen des cylindres broyeurs (24) à un diamètre de moins de 5 µm, les phases pouzzolaniques, hydrauliques latentes ou hydrauliques actives d'une matière première ayant des propriétés réactives potentielles étant libérées,
**en ce que** le produit de broyage est soumis à un autre tamisage en grain fin et grain très fin dans un groupe de tamisage à grain très fin (30),
**en ce que** le groupe de tamisage à grain très fin (30) est utilisé et ajusté avec une limite de séparation de sorte à séparer le grain très fin ayant une finesse inférieure à D50 = 6 µm,
**en ce que** le grain fin est extrait du procédé de préparation et conduit vers une utilisation technique en lien avec les matériaux de construction,
**en ce que** le grain très fin est conduit vers un filtre (40), un flux d'air de processus étant conduit du système combiné broyeur-tamis (20) au filtre (40) par le groupe de tamisage à grain très fin (30) et
**en ce que** le grain très fin est extrait du flux d'air de processus au moyen d'un filtre (40) et conduit vers une utilisation comme matériau composite dans le ciment, au moins une partie des phases pouzzolaniques, hydrauliques latentes ou hydrauliques actives du grain très fin d'une matière première ayant des propriétés réactives potentielles étant activée par la libération et/ou une activité globale plus élevée étant obtenue grâce à la surface nettement accrue des particules.

2. Procédé selon la revendication 1,
**caractérisé**
**en ce que** le groupe de tamisage à grain très fin (30) est utilisé et ajusté avec une limite de séparation pour extraire après le filtre (40) 10% à 20% de la masse de la matière première du flux d'air de processus comme grain très fin.

3. Procédé selon la revendication 1 ou 2,
**caractérisé**
**en ce qu'**en guise de groupe de tamisage à grain très fin (30) sont utilisés des dispositifs à cyclones tels que des multicyclones (35) ou des batteries de cyclones, ou plusieurs cribleurs très fins raccordés en parallèle.

4. Procédé selon les revendications 1 à 3,
**caractérisé**
**en ce qu'**en guise de matière première sont utilisées des scories LD, des cendres volantes ou des laitiers granulés de hauts fourneaux.

5. Procédé selon les revendications 1 à 4,
**caractérisé**
**en ce que**, dans le système combiné broyeur-tamis (20) sont ajoutés des adjuvants de broyage, en particulier des adjuvants de broyage aminés avec ou sans une faible proportion de sels chlorurés.

6. Procédé selon les revendications 1 à 5,
**caractérisé**
**en ce que** le grain fin est extrait du groupe de tamisage à grain très fin (30) par un équipement qui limite au moins une entrée d'air parasite dans le flux d'air de processus.

7. Procédé selon les revendications 1 à 6,
**caractérisé**
**en ce qu'**en cas d'utilisation de dispositifs à cyclones pour augmenter la finesse du grain très fin, la vitesse d'écoulement dans les cyclones (36) des dispositifs à cyclones est augmentée.

8. Procédé selon la revendication 7,
**caractérisé**
**en ce que** la vitesse d'écoulement est augmentée par l'augmentation du débit d'air de processus et/ou la réduction du nombre des cyclones (36) actifs dans les dispositifs à cyclones.

9. Procédé selon la revendication 7,
**caractérisé**
**en ce que** le débit d'air de processus dans la région des dispositifs à cyclones est augmenté par la recirculation d'une partie de l'air de processus de l'aval du filtre (40) et l'injection d'une partie de l'air de processus en amont des dispositifs à cyclones.

10. Procédé selon les revendications 1 à 9,
**caractérisé**
**en ce qu'**en cas d'utilisation de dispositifs à cyclones pour réduire la finesse du grain très fin, la vitesse d'écoulement dans les cyclones (36) des dispositifs à cyclones est réduite.

11. Procédé selon la revendication 10,
**caractérisé**
**en ce que** la vitesse d'écoulement est réduite par la réduction du débit d'air de processus, l'augmentation du nombre de cyclones (36) actifs des dispositifs à cyclones, l'injection d'air de trémie dans les cyclones (36) des dispositifs à cyclones et/ou par la dérivation d'une partie de l'air de processus en amont des dispositifs à cyclones et l'injection de cette partie de l'air de processus en aval des dispositifs à cyclones.
